# EUROPEAN PATENT APPLICATION

(11) **EP 4 650 934 A1**
(43) Date of publication of application: **19.11.2025**
(21) Application number: 25174514.7
(22) Date of filing: 06.05.2025
(51) Int. Cl.: G06F 3/12, G06K 15/02

(54) **DATA PROCESSING SYSTEM, INFORMATION PROCESSING APPARATUS, AND DATA PROCESSING APPARATUS**

(30) Priority: 15.05.2024 JP 2024079420
(71) Applicant: KYOCERA Document Solutions Inc., Osaka-shi, Osaka 540-8585 (JP)
(72) Inventor: DEIPARINE, Anthony, Osaka-shi, Osaka, 540-8585 (JP)
(74) Representative: Herrero & Asociados, S.L.

(57) **Abstract**

An information processing apparatus (3) calculates use frequency of the character of a same font name and a same font size, with respect to a plurality of characters in a text document, generates print data, including priority information indicating priority of each character in order of the use frequency, and the text document, and transmits the print data to an image forming apparatus (2). The image forming apparatus (2) determines a character to be drawn, upon receipt of the print data, generates a font cache of the character to be drawn and stores the font cache in a region in the font cache storage region (211) corresponding to the priority of the character to be drawn, when the font cache storage region (211) has a vacant capacity, and deletes the font cache of a character lowest in priority, from the font cache storage region (211), when the font cache storage region (211) is without vacant capacity.

## Description

### BACKGROUND

The present invention relates to a data processing system, an information processing apparatus, and a data processing apparatus, and in particular to a technique to store a font cache in a font cache storage region.

Various techniques to prevent a memory shortage of a font cache storage region are currently known. For example, a first technique is known including expanding the font cache storage region in an expansion unit according to the font size, resolution, and the number of types of the character, when a capacity sufficient for storing a bitmap image of a character is unavailable in the unused portion of the font cache storage region.

A second known technique includes looking up a use frequency table when executing a print job, and laying out scalable font on a bitmap, when the use frequency of the scalable font to be printed is equal to or more than a predetermined number of times, thereby registering the scalable font on a RAM.

Further, a third technique includes looking up a character list, showing the characters from the recently used one, to the one used in an oldest time, and deleting the character used in the oldest time from the font cache storage region, when the vacant capacity is insufficient in the font cache storage region.

### SUMMARY

The invention proposes further improvement of the foregoing technique.

In an aspect, the invention provides a data processing system including an information processing apparatus, and a data processing apparatus. The information processing apparatus includes a first communication device and a first control device. The first communication device communicates with the data processing apparatus, via a network. The first control device includes a processor, and acts as a first controller, when the processor executes a first computer program. The first controller calculates, upon receipt of a drawing instruction of a text document containing a plurality of characters, use frequency of the character of a same font name and a same font size, with respect to each of the plurality of characters, generates print data, including priority information indicating priority of each of the characters in order of the use frequency, and the text document, and transmits the print data to the data processing apparatus via the first communication device. The data processing apparatus includes a second communication device, a storage device, and a second control device. The second communication device communicates with the information processing apparatus via the network. The storage device includes a font cache storage region. The second control device includes a processor, and acts as a second controller, when the processor executes a second computer program. The second controller determines a character to be drawn among the plurality of characters, upon receipt of the print data via the second communication device, generates a font cache of the character to be drawn and stores the font cache in a region in the font cache storage region corresponding to the priority of the character to be drawn, when the font cache storage region has a vacant capacity for storing the font cache corresponding to at least one character, and secures the vacant capacity by deleting the font cache of a character lowest in priority, among font caches stored in the font cache storage region, when the font cache storage region is without the vacant capacity.

In another aspect, the invention provides an information processing apparatus including a first communication device, and a first control device. The first communication device communicates with the data processing apparatus, via a network. The first control device includes a processor, and acts as a first controller, when the processor executes a first computer program. The first controller calculates, upon receipt of a drawing instruction of a text document containing a plurality of characters, use frequency of the character of a same font name and a same font size, with respect to the plurality of characters, generates print data, including priority information indicating priority of each of the characters in order of the use frequency, and the text document, and transmits the print data to the data processing apparatus via the first communication device.

In still another aspect, the invention provides a data processing apparatus including a second communication device, a storage device, and a second control device. The second communication device communicates with the information processing apparatus via a network. The storage device includes a font cache storage region. The second control device includes a processor, and acts as a second controller, when the processor executes a second computer program. The second controller determines a character to be drawn among the plurality of characters, upon receipt of the print data via the second communication device, generates a font cache of the character to be drawn and stores the font cache in a region in the font cache storage region corresponding to the priority of the character to be drawn, when the font cache storage region has a vacant capacity for storing the font cache corresponding to at least one character, and secures the vacant capacity by deleting the font cache of a character lowest in priority, among font caches stored in the font cache storage region, when the font cache storage region is without the vacant capacity.

### BRIEF DESCRIPTION OF THE DRAWINGS

Fig. 1 is a schematic diagram showing a configuration of a data processing system;
Fig. 2 is a front cross-sectional view showing a structure of an image forming apparatus;
Fig. 3 is a block diagram showing a configuration of the image forming apparatus;
Fig. 4 is a block diagram showing a configuration of an information processing apparatus;
Fig. 5 is a flowchart showing a print data generating process;
Fig. 6 is a flowchart showing a data analysis process;
Fig. 7 presents an example of a character table;
Fig. 8 is a flowchart showing a font cache storage process;
Fig. 9A to Fig. 9D are schematic drawings showing how font caches are stored; and
Fig. 10A and Fig. 10B are schematic drawings showing how the font caches are deleted.

### DETAILED DESCRIPTION

Hereafter, a data processing system, an information processing apparatus, and a data processing apparatus according to an embodiment of the invention will be described, with reference to the drawings.

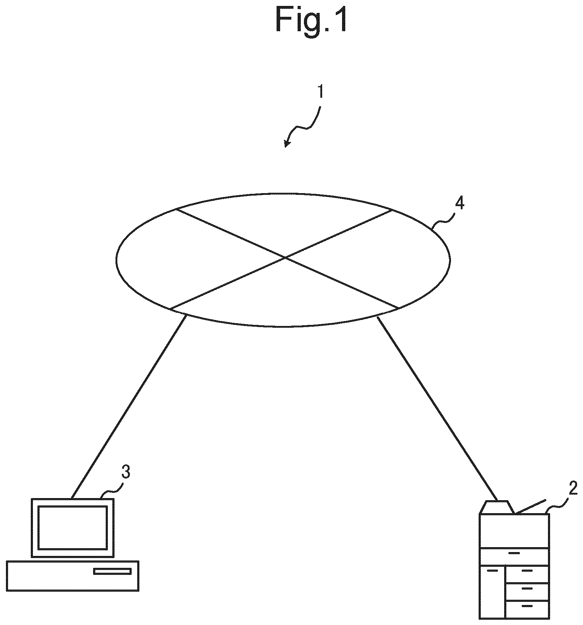

Fig. 1 is a schematic diagram showing a configuration of the data processing system according to the embodiment of the invention. Referring to Fig. 1, the data processing system 1 includes an image forming apparatus 2 and an information processing apparatus 3. The image forming apparatus 2 and the information processing apparatus 3 are connected to each other, via a network 4. The image forming apparatus 2 exemplifies the data processing apparatus in the invention.

### Configuration of Image Forming Apparatus 2

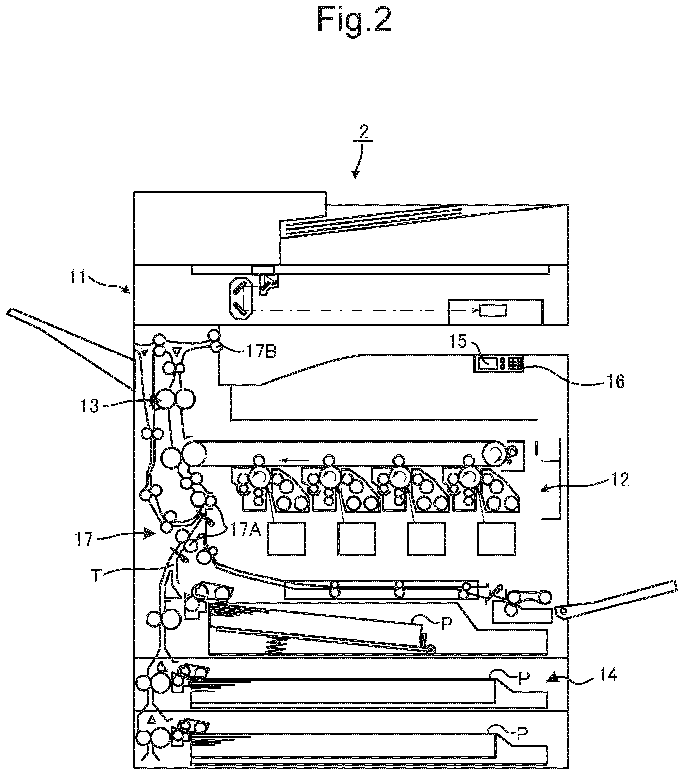

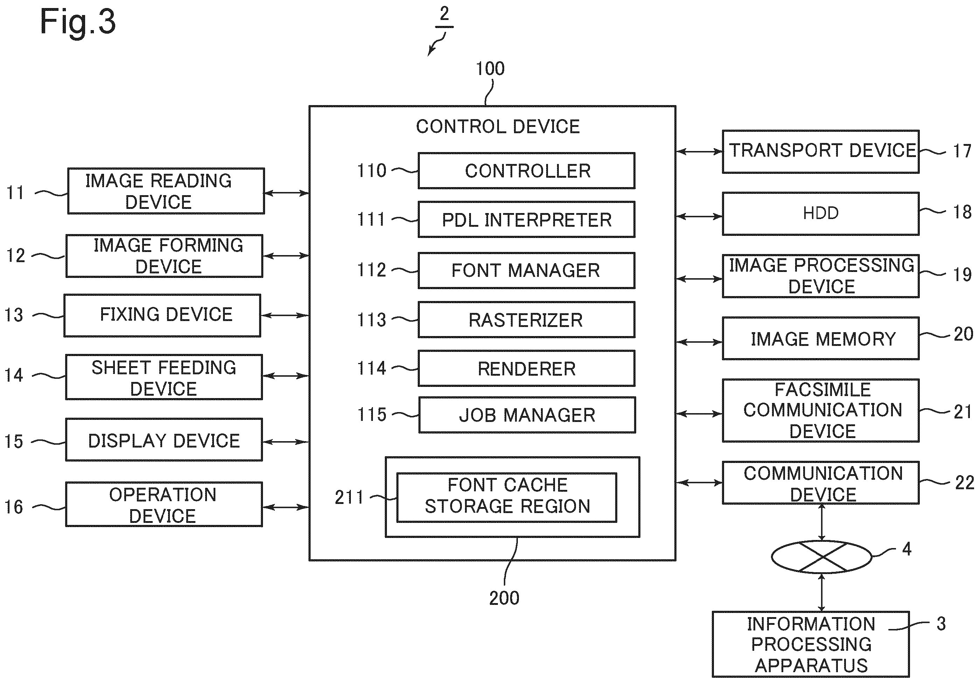

Fig. 2 is a front cross-sectional view showing the structure of the image forming apparatus 2. Fig. 3 is a block diagram showing the configuration of the image forming apparatus 2. Referring to Fig. 2, the image forming apparatus 2 is a multifunction peripheral having a plurality of functions, such as copying, transmitting, printing, and facsimile transmission.

An image reading device 11, an image forming device 12, a fixing device 13, a sheet feeding device 14, and so forth are accommodated inside the casing of the image forming apparatus 2.

The image reading device 11 reads the image of a source document, either by a moving document reading method or a fixed document reading method, and generates image data.

The image forming device 12 includes a photoconductor drum, a charging device, an exposure device, a development device, and a transfer device. The image forming device 12 forms an image constituted of a toner image, on a sheet P transported along a transport route T, on the basis of the image data.

The fixing device 13 heats and presses the sheet P on which the toner image has been formed by the image forming device 12, to thereby fix the toner image onto the recording sheet P. The sheet P onto which the toner image has been fixed is delivered to an output tray.

The sheet feeding device 14 includes a manual bypass tray, and a plurality of sheet cassettes. The sheet feeding device 14 draws out, one by one with a pickup roller, the sheets P stored in one of the plurality of sheet cassettes, or the sheets placed on the manual bypass tray, and delivers the sheets to the transport route T.

Referring to Fig. 3, the image forming apparatus 2 includes a control device (second control device) 100. The control device 100 includes a processor, a random-access memory (RAM) 200, and a read-only memory (ROM). The processor is, for example, a central processing unit (CPU), a micro processing unit (MPU), or an application-specific integrated circuit (ASIC).

The control device 100 acts as a controller (second controller) 110, a page description language (PDL) interpreter 111, a font manager 112, a rasterizer 113, a renderer 114, and a job manager 115, when the processor executes the computer programs stored in the built-in ROM or a hard disk drive (HDD) 18.

The controller 110 controls the overall operation of the image forming apparatus 2. The PDL interpreter 111 interprets PDL data. When the file that is the subject of the job incudes a character, the manager 112 generates the font cache or object of the character.

The rasterizer 113 generates the font cache, by rasterizing the character of an outline font. The font manager 112 and the rasterizer 113 executes a font cache storage process according to this embodiment, as will be subsequently described in detail.

The renderer 114 generates image data, by drawing the character or graphic included in the file that is the subject of the job, according to the drawing command included in the PDL data. The job manager 115 executes a prespecified job, such as a print job or transmission job, with respect to the image data generated by the renderer 114.

The controller 110 and other components may be constituted in the form of a logic circuit, instead of being realized by the operation according to the computer program, or constituted of two or more control devices.

The RAM 200 is utilized as a work memory. The RAM 200 includes a font cache storage region 211. In the font cache storage region 211, the font cache indicating the character to be drawn is stored.

The control device 110 is electrically connected to the image reading device 11, the image forming device 12, the fixing device 13, the sheet feeding device 14, a display device 15, an operation device 16, a transport device 17, the HDD 18, an image processing device 19, an image memory 20, a facsimile communication device 21, and a communication device 22.

The display device 15 is, for example, constituted of an LCD or an organic light-emitting diode (OLED) display. The display device 15 displays various types of screens.

The operation device 16 includes a plurality of hard keys, and a touch panel overlaid on the display device 15. The operation device 16 receives an instruction inputted by a user.

The transport device 17 includes a transport roller pair 17A, a delivery roller pair 17B, and a transport motor. The controller 110 drives the transport motor to rotate, to cause the transport roller pair 17A and the delivery roller pair 17B to rotate, thereby transporting the sheet P along the transport route T.

The HDD 18 stores therein the image data generated by the image reading device 11, and the computer programs for realizing the functions of the image forming apparatus 2. As an example of the computer programs, the HDD 18 contains a control program, for executing a font cache storing operation according to this embodiment.

The image processing device 19 executes, as necessary, the image processing with respect to the image data generated by the image reading device 11. The image memory 20 temporarily stores therein the image data generated by the image reading device 11. The facsimile communication device 21 transmits and receives the image data via the public telephone line.

The communication device 22 includes a communication module such as a local area network (LAN) board. The controller 110 performs data communication through the communication device 22, with an external device such as the information processing apparatus 3 connected via a network. The communication device 22 exemplifies the second communication device in the invention.

A power source is connected to each of the components of the image forming apparatus 2. When the user turns the power on, the power is supplied to those components from the power source.

### Configuration of Information Processing Apparatus 3

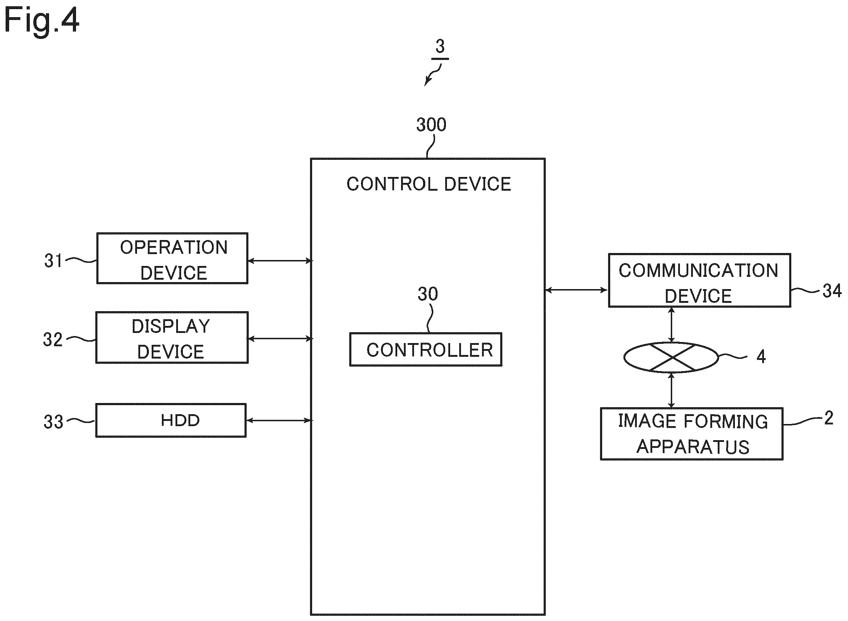

Fig. 4 is a block diagram showing a configuration of the information processing apparatus 3. The information processing apparatus 3 is, for example, a personal computer (PC). As shown in Fig. 4, the information processing apparatus 3 includes a control device (first control device) 300, an operation device 31, a display device 32, an HDD 33, and a communication device 34. The control device 300 includes a processor, a RAM, a ROM, and so forth. The processor is, for example, a CPU, an MPU, or an ASIC.

The control device 300 acts as a controller (first controller) 30, when the processor executes the computer program (second computer program) stored in the ROM or HDD 33. The controller 30 controls the overall operation of the information processing apparatus 3. The controller 30 executes a print data generating process according to this embodiment. The details of the print data generating process will be subsequently described.

Here, the controller 30 may be constituted in the form of a logic circuit, instead of being realized by the operation according to the computer program, or constituted of two or more control devices.

The operation device 31 includes a keyboard for inputting characters, and a mouse serving as a pointing device. The operation device 31 receives an instruction inputted by the user.

The display device 32 includes an LCD or an OLED display. The display device 32 displays various types of screens.

The HDD 33 is a large-capacity memory unit, for storing various types of data such as the image data. The HDD 33 stores therein various computer programs for realizing the basic functions of the information processing apparatus 3. As an example of the computer programs, the HDD 33 contains a printer driver for executing print data generating process according to this embodiment.

The communication device 34 includes a communication module such as a LAN board. The communication device 34 performs data communication through the network 4, with an external device such as the information forming apparatus 2. The communication device 34 exemplifies the first communication device in the invention.

A power source is connected to each of the components of the information processing apparatus 3. When the user turns the power on, the power is supplied to those components from the power source.

### Operation

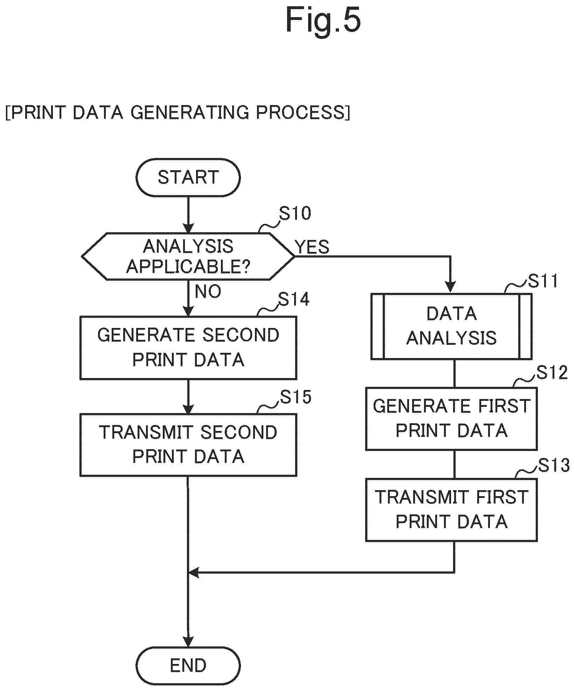

Referring to Fig. 5 to Fig. 10B, an operation of the data processing system 1, performed to execute the print data generating process and the font cache storage process, will be described hereunder.

### Operation of Information Processing Apparatus 3

The user can generate a text document containing a plurality of characters, and input a printing instruction including a drawing instruction, by operating the operation device 31 of the information processing apparatus 3. In this embodiment, the text document refers to a document file containing characters from which the font cache can be generated, at least by a predetermined rate (e.g., 50%).

Here, it will be assumed that the first page of the generated text document includes a plurality of characters of the outline font, the font name of which is "MSP gothic", and the font size of which is one of "18" point, "72" point, and "20"point.

It will be assumed that the first page includes 32 characters having the font size of "18" point, and that seven characters " 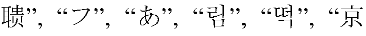 ", and " 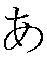 " of "18" point are aligned in this order from the top.

Upon receipt of such printing instruction, the controller 30 of the information processing apparatus 3 starts to execute the print data generating process specified in Fig. 5. The controller 30 exemplifies the first controller in the invention. In the print data generating process, the controller 30 decides whether the file to be printed can be subjected to analysis (step S10).

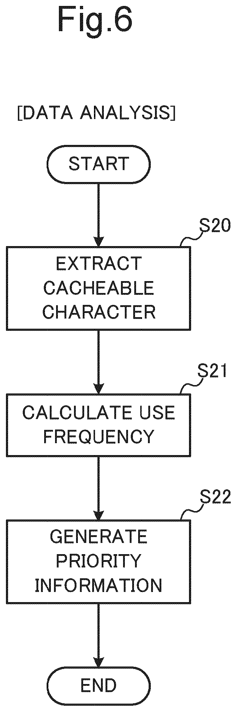

In this case, the file to be printed is a text document, and therefore the controller 30 decides that the file to be printed can be subjected to the analysis (YES at step S10), and starts to execute data analysis process specified in Fig. 6 (step S11).

In the data analysis process, at first the controller 30 extracts a plurality of characters from which the font cache can be generated (i.e., character data of the outline font), from the text document (step S20). After step S20, the controller 30 calculates use frequency of the character of the same font name and same font size on the basis of the plurality of characters extracted, with respect to each page of the text document (step S21).

It will be assumed, in this case, that the controller 30 has calculated the use frequency of the character the font name of which is "MSP gothic" and the font size of which is "18" point, with respect to the first page of the text document, as "10 times" for the character " 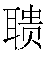 ", "3 times" for the character " 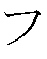 ", "11 times" for the character " 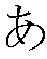 ", "3 times" for the character " 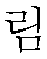 ", "4 times" for the character " 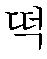 ", and "once" for the character " 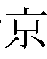 ".

After step S21, the controller 30 generates, on the basis of the calculated use frequency, priority information indicating the priority rank of the character in order of the use frequency, with respect to each of the combinations of the font name and the font size in each page (step S22). To be more specific, the controller 30 sorts the characters in order of the use frequency, with respect to each of the combinations of the font name and the font size in each page, and generates a character table indicating the order of the characters sorted in order of the use frequency, as the priority information.

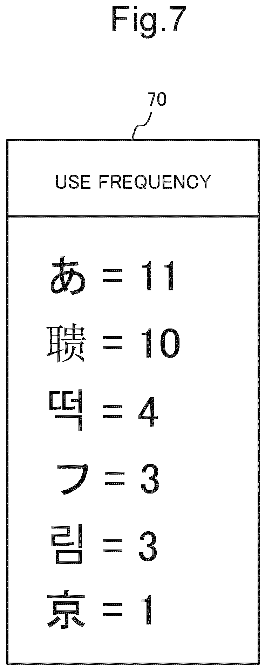

In this case, the controller 30 generates a character table 70, indicating, as the order of priority, the order of the characters " 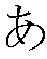 ", " 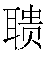 ", " 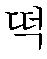 ", " 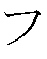 ", " 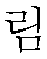 ", and " 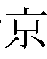 ", the font name of which is "MSP gothic" and the font size of which is "18" point, sorted in order of the use frequency, with respect to the first page of the text document, as shown in Fig. 7. In the character table 70, in other words, the order of the characters is indicated such that the more frequently used character is given the higher priority.

The controller 30 can easily generate the priority information indicating the priority of each character, by generating the character table as above. Upon completing the operation of step S22, the controller 30 finishes the data analysis process.

Referring again to Fig. 5, upon finishing the data analysis process of step 11, the controller 30 generates first print data, including a printer job language (PJL) command, indicating the details of the printing instruction, the character information, and the priority information, and the text document (step S12). The first print data is page description language (PDL) data. The character information indicates, for example, the font name, the font size, and a delimiter.

After step S12, the controller 30 transmits the first print data to the image forming apparatus 2, via the communication device 34 (step S13). After step S13, the controller 30 finishes the print data generating process.

On the other hand, in the case where the file to be printed is not a text document (e.g., an image file including graphics or photos, and not including a text), the controller 30 decides that the file to be printed is unable to be subjected to the analysis (NO at step S10), and generates second print data including the PJL command indicating the details of the printing instruction and the character information, and the file to be printed (step S14). The second print data is PDL data, which does not include the priority information.

After step S14, the controller 30 transmits the second print data to the image forming apparatus 2, via the communication device 34 (step S15). After step S15, the controller 30 finishes the print data generating process.

### Operation of Image Forming Apparatus 2

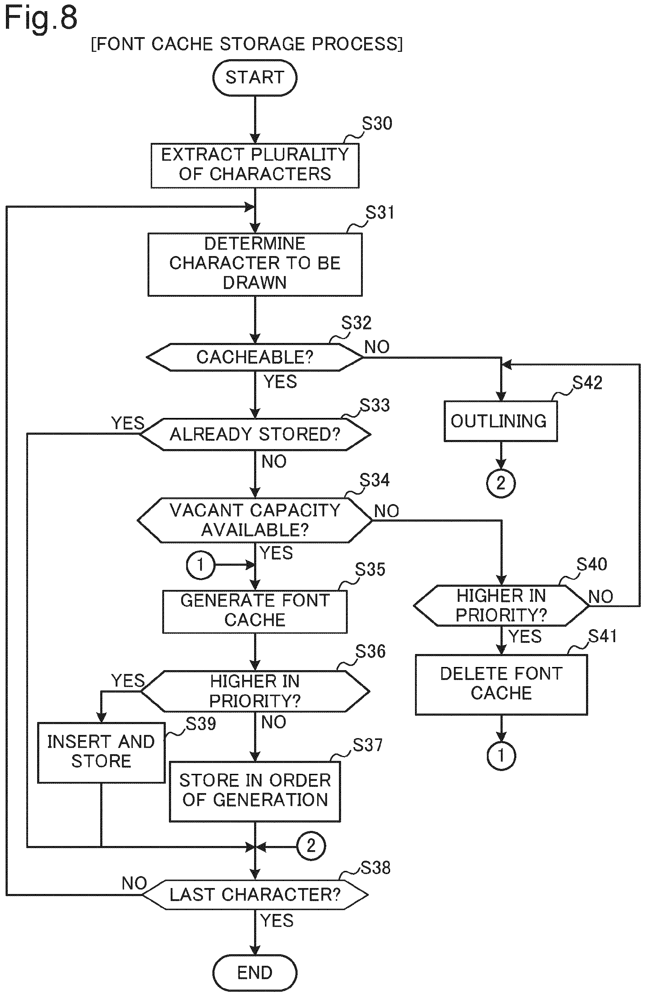

When the communication device 22 of the image forming apparatus 2 receives the first print data, the PDL interpreter 111 interprets the PDL data. When the PJL command includes the priority information (i.e., when the PDL data is interpreted as being the first print data), the PDL interpreter 111 requests the font manager 112 and the rasterizer 113 to start to execute the font cache storage process specified in Fig. 8.

The font manager 112 and the rasterizer 113 exemplify the second controller in the invention.

In the font cache storage process, at first the font manager 112 determines a page to be drawn in the text document, and extracts a plurality of characters to be drawn, from the page to be drawn (step S30). In this example, the font manager 112 determines the first page of the text document, as the page to be drawn.

The font manager 112 extracts, from the first page, a plurality of characters of the outline font, the font name of which is "MSP gothic", and the font size of which is one of "18" point, "72" point, and "20" point. The font manager 112 extracts 32 characters, from the characters having the font size of "18" point.

After step S30, the font manager 112 determines one character to be drawn, among the plurality of characters extracted (step S31). In this case, the font manager 112 determines " 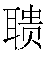 " located at the head of the first page, and having the font size of "18" point, as the character to be drawn. After step S31, the font manager 112 decides whether the font cache of the character to be drawn can be generated (step S32).

Since " 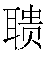 " is a character of the outline font, the font manager 112 decides that the font cache of the character to be drawn can be generated (YES at step S32), and decides whether the font cache of the character to be drawn is already stored in the font cache storage region 211 (step S33).

At this point, nothing is stored in the font cache storage region 211, and therefore the font manager 112 decides that the font cache of the character to be drawn is not stored in the font cache storage region 211 (NO at step S33), and then decides whether the font cache storage region 211 has vacant capacity sufficient for storing the font cache of at least one character (step S34).

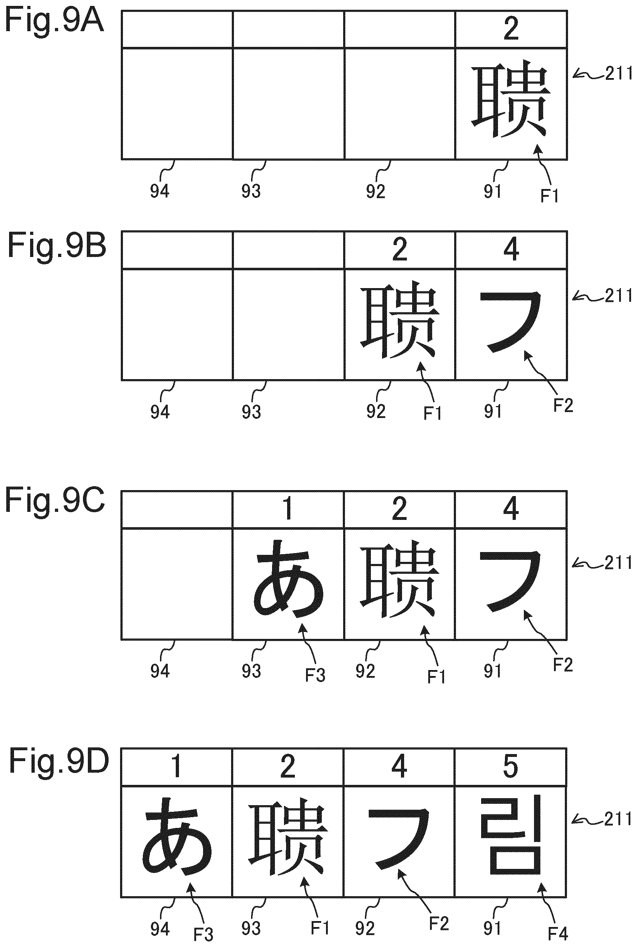

Referring here to Fig. 9A to Fig. 9D, it will be assumed that the font cache storage region 211 includes regions 91 to 94 aligned in this order, as the storage region for the characters having the font size of "18" point. In each of the regions 91 to 94, the font cache of one character can be stored. In other words, the upper limit of the font caches of the characters of "18" point that can be stored in the font cache storage region 211 is four characters.

### (1) When Font Cache Storage Region 211 Has Vacant Capacity

In this case, since the vacant capacity of the font cache storage region 211 is for four characters, the font manager 112 decides that the font cache storage region 211 has the vacant capacity (YES at step S34), and causes the rasterizer 113 to generate raster data of the character to be drawn. Then the font manager 112 generates the font cache of the character to be drawn, using the generated raster data and the character data of the character to be drawn (step S35). More specifically, the font manager 112 generates the font cache F1 of " 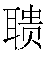 ", as shown in Fig. 9A.

After step S35, the font manager 112 looks up the priority information included in the first print data, thereby deciding whether the priority of the character to be drawn is higher than the priority of at least one of the characters respectively corresponding to all the font caches stored in the font cache storage region 211 (step S36).

Since nothing is stored in the font cache storage region 211 at this point, the font manager 112 decides that the priority of the character to be drawn is not on the higher side (NO at step S36), and stores the font cache of the character to be drawn in the font cache storage region 211, according to a rule for storing the cache in order of generation (step S37).

Here, the rule for storing the cache in order of generation will be described hereunder. When storing the font cache according to the rule, the font manager 112 stores the font caches such that an older font cache is stored in the region of a larger number, of the region 91 to the region 94 shown in Fig. 9A to Fig. 9D (i.e., the newest font cache is stored in the region 91, and the oldest font cache is stored in the region 94).

At step S37, in the case where one or more font caches are already stored, the font manager 112 moves such font caches to the adjacent regions, and stores the newest font cache that has just been generated, in the region 91.

More specifically, the font manager 112 stores the font cache F1 in the region 91, shown in Fig. 9A. Here, for the sake of clarity of the description, Fig. 9A to Fig. 9D also show the priority of the character represented by the font cache. After step S37, the font manager 112 decides whether the font cache of the last character in the page to be drawn has been stored (step S38).

In this case, the font manager 112 decides that the font cache of the last character has not yet been stored (NO at step S38), and returns to step S31. The font manager 112 determines " 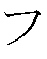 " located next (i.e., second place) in the first page, as the character to be drawn (step S31). Then the font manager 112 executes the operation of step S32 to step S35 as described above, with respect to the character to be drawn "7".

Here, the priority of " 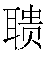 " represented by the font cache F1 already stored in the font cache storage region 211 is "2", and the priority of " 7" is "4". Therefore, the font manager 112 decides that the priority of the character to be drawn is not on the higher side (NO at step S36), and moves font cache F1 to the region 92 and stores the generated font cache F2 of " 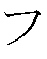 " in the region 91, as shown in Fig. 9B (step S37).

The font manager 112 again decides that the font cache of the last character has not yet been stored (NO at step S38), and returns to step S31. The font manager 112 determines " 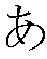 " located next (i.e., third place) in the first page, as the character to be drawn (step S31). Then the font manager 112 executes the operation of step S32 to step S35 as described above, with respect to the character to be drawn " 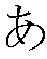 ".

At this point, the priority of " 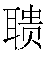 " represented by the font cache F1 already stored in the font cache storage region 211 is "2", and the priority of " 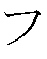 " represented by the font cache F2 is "4". In contrast, the priority of " 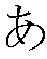 " is "1".

Accordingly, the font manager 112 decides that the priority of the character to be drawn is on the higher side (YES at step S36), and stores the font cache of the character to be drawn, by inserting the same in the position in the font cache storage region 211 corresponding to a font cache older in order of generation, than the font caches of all the characters lower in priority than the character to be drawn (step S39).

More specifically, the font manager 112 stores the generated font cache F3 of " 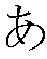 ", by inserting the same in the region 93 which is the position for the font cache older in order of generation than the font caches F1 and F2, as shown in Fig. 9C. After step S39, the font manager 112 again decides that the font cache of the last character has not yet been stored (NO at step S38), and returns to step S31.

The font manager 112 determines " 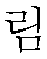 " located next (i.e., fourth place) in the first page, as the character to be drawn (step S31). Then the font manager 112 executes the operation of step S32 to step S35 as described above, with respect to the character to be drawn " 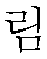 ".

At this point, the priority of " 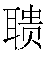 " represented by the font cache F1 already stored in the font cache storage region 211 is "2", the priority of " 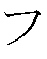 " represented by the font cache F2 is "4", and the priority of " 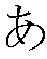 " represented by the font cache F3 is "1". In contrast, the priority of " 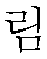 " is "5".

Accordingly, the font manager 112 decides that the priority of the character to be drawn is not on the higher side (NO at step S36), and moves the font caches F1, F2, and F3 to the regions 92, 93, and 94 respectively, and stores the generated font cache F4 of " 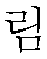 " in the region 91, as shown in Fig. 9D (step S37).

By executing thus the operation of step S36 to step S39, the font manager 112 stores the generated font caches F1, F2, F3, and F4 in the regions in the font cache storage region 211 respectively corresponding to the priority of the characters to be drawn.

### (2) When Font Cache Storage Region 211 Has No Vacant Capacity

After step S37, the font manager 112 again decides that the font cache of the last character has not yet been stored (NO at step S38), and returns to step S31. The font manager 112 determines " 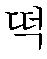 " located next (i.e., fifth place) in the first page, as the character to be drawn (step S31). Then the font manager 112 executes the operation of step S32 to step S35 as described above, with respect to the character to be drawn " 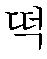 ".

At this point, the vacant capacity of the font cache storage region 211 is zero characters as shown in Fig. 9D, and therefore the font manager 112 decides that the font cache storage region 211 has no vacant capacity (NO at step S34), and looks up the priority information included in the first print data, thereby deciding whether the priority of the character to be drawn is higher than the priority of at least one of the characters respectively corresponding to all the font caches stored in the font cache storage region 211 (step S40).

At this point, the priority of " 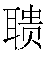 " represented by the font cache F1 already stored in the font cache storage region 211 is "2", the priority of " 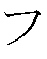 " represented by the font cache F2 is "4", the priority of " 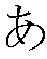 " represented by the font cache F3 is "1", and the priority of " 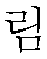 " represented by the font cache F4 is "5". In contrast, the priority of " 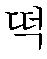 " is "5".

Accordingly, the font manager 112 decides that the priority of the character to be drawn is on the higher side (YES at step S40), and deletes the font cache of the character lowest in priority, among the font caches stored in the font cache storage region 211, thereby securing the vacant capacity (step S41).

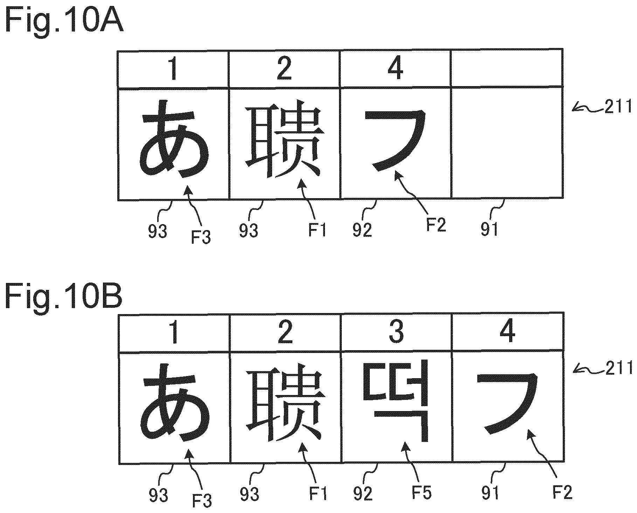

More specifically, the font manager 112 deletes the font cache F4 stored in the region 91, representing the character lowest in priority, among the font caches F1, F2, F3, and F4 stored in the font cache storage region 211, as shown in Fig. 10A. After step S41, the font manager 112 proceeds to step S35, and generates the font cache F5 of " 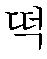 ", as shown in Fig. 10B.

At this point, the priority of " 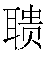 " represented by the font cache F1 already stored in the font cache storage region 211 is "2", the priority of " 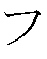 " represented by the font cache F2 is "4", and the priority of " 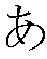 " represented by the font cache F3 is "1". In contrast, the priority of " 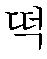 " is "3".

Accordingly, the font manager 112 decides that the priority of the character to be drawn is on the higher side (YES at step S36), and stores the generated font cache F5, by inserting the same in the region 92, corresponding to the position older in order of generation than the font cache F2, as shown in Fig. 10B (step S39).

After step S39, the font manager 112 again decides that the font cache of the last character has not yet been stored (NO at step S38), and returns to step S31. The font manager 112 determines " 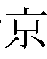 " located next (i.e., sixth place) in the first page, as the character to be drawn (step S31). Then the font manager 112 executes the operation of step S32 to step S35 as described above, with respect to the character to be drawn " 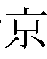 ".

At this point, the vacant capacity of the font cache storage region 211 is zero characters as shown in Fig. 10B, and therefore the font manager 112 decides that the font cache storage region 211 has no vacant capacity (NO at step S34).

At this point, the priority of " 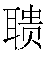 " represented by the font cache F1 already stored in the font cache storage region 211 is "2", the priority of " 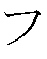 " represented by the font cache F2 is "4", the priority of " 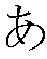 " represented by the font cache F3 is "1", and the priority of " 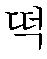 " represented by the font cache F5 is "3". In contrast, the priority of " 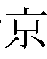 " is "6".

Accordingly, the font manager 112 decides that the priority of the character to be drawn is not on the higher side (NO at step S40), and performs outlining of the character to be drawn, thereby generating an object representing the character to be drawn (step S42). More specifically, the font manager 112 generates the object representing the character " 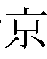 ". After step S42, the font manager 112 proceeds to step S38.

The font manager 112 again decides that the font cache of the last character has not yet been stored (NO at step S38), and returns to step S31. The font manager 112 determines " 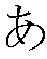 " located next (i.e., seventh place) in the first page, as the character to be drawn (step S31). Then the font manager 112 executes the operation of step S32 to step S35 as described above, with respect to the character to be drawn " 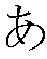 ".

At this point, since the font cache F3 of " 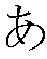 " is already stored in the font cache storage region 211, as shown in Fig. 10B, there is no need to newly generate the font cache of " 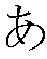 ". Therefore, the font manager 112 decides that the font cache of the character to be drawn is already stored (YES at step S33), and proceeds to step S38.

The font manager 112 executes the operation of step S31 to step S42 as described above, with respect to the remaining characters in the first page, and finishes the font cache storage process, upon storing the font cache of the last character (YES at step S38).

The renderer 114 draws the characters in the page to be drawn thereby generating the image data, using the font caches F1, F2, F3, and F5 stored in the font cache storage region 211, and the generated object, according to the drawing command included in the PDL data. The job manager 115 causes the image forming device 12 to form the image represented by the generated image data, on the sheet P.

In the mentioned font cache storage process, in the case where the character to be drawn is not of the outline font, but of the bitmap font, the font manager 112 decides that the font cache of the character to be drawn is unable to be generated (NO at step S32), and proceeds to step S42, where the font manager 112 performs the outlining of the character to be drawn, thereby generating the object representing the character to be drawn.

When the communication device 22 of the image forming apparatus 2 receives the second print data, the PDL interpreter 111 interprets the PDL data. When the PJL command does not include the priority information (i.e., when the PDL data is the second print data), the PDL interpreter 111 does not instruct the execution of the font cache storage process specified in Fig. 8.

When the file to be printed contains characters, the font manager 112 and the rasterizer 113 executes an ordinary operation for generating the font cache or object of the character in the file to be printed, without executing the font cache storage process specified in Fig. 8.

The renderer 114 draws the character or graphic included in the file to be printed, according to the drawing command included in the PDL data, thereby generating the image data. The job manager 115 causes the image forming device 12 to form the image represented by the generated image data, on the sheet P.

According to the foregoing embodiment, upon receipt of the drawing instruction of the text document containing a plurality of characters, the controller 30 of the information processing apparatus 3 calculates the use frequency of the character of the same font name and the same font size, with respect to the plurality of characters, generates the first print data, including the priority information indicating the priority of each of the characters in order of the use frequency, and the text document, and transmits the first print data to the image forming apparatus 2, via the communication device 34.

When the communication device 22 receives the first print data, the font manager 112 and the rasterizer 113 of the image forming apparatus 2 determine the character to be drawn among the plurality of characters included in the text document, generate the font cache of the character to be drawn and store the font cache in the region in the font cache storage region 211 corresponding to the priority of the character to be drawn, when the font cache storage region 211 has the vacant capacity for storing the font cache corresponding to at least one character, and secure the vacant capacity by deleting the font cache of the character lowest in priority, among the font caches stored in the font cache storage region 211, when the font cache storage region 211 is without the vacant capacity.

Accordingly, the font cache of the character used more frequently is stored in the font cache storage region 211 with higher priority. Therefore, in particular in the case of a text document composed of languages that use kanji characters, the usage rate of the font cache can be raised, compared with the case where the font caches of all the characters are stored. In addition, the memory can be prevented from being allocated in vain, for the characters of low use frequency. Further, since the font cache of the characters of low use frequency is deleted, when the vacant capacity is unavailable, occurrence of an error due to memory shortage can be prevented. Still further, since the priority information is generated on the side of the information processing apparatus 3, the workload of the image forming apparatus 2 can be alleviated.

According to the embodiment, when the font cache storage region 211 has the vacant capacity, and the priority of the character to be drawn is lower than that of the characters respectively represented by all the font caches already stored in the font cache storage region 211, the font manager 112 stores the font cache of the character to be drawn in the font cache storage region 211, according to the rule for storing the font cache in the order of generation, and when the priority of the character to be drawn is higher than that of at least one of the characters respectively represented by all the font caches already stored in the font cache storage region 211, the font manager 112 stores the font cache of the character to be drawn, by inserting the same in the position in the font cache storage region 211 corresponding to the position older in order of generation, than the font caches of all the characters lower in priority than the character to be drawn

The mentioned arrangement facilitates the generated font cache to be stored in the region in the font cache storage region 211, corresponding to the priority of the character to be drawn.

In addition, according to the embodiment, when the font cache storage region 211 has no vacant capacity, and the priority of the character to be drawn is higher than that of at least one of the characters respectively represented by all the font caches already stored in the font cache storage region 211, the font manager 112 deletes the font cache of the character lowest in priority, among the font caches stored in the font cache storage region 211, and when the priority of the character to be drawn is lower than that of the characters respectively represented by all the font caches already stored in the font cache storage region 211, the font manager 112 performs the outlining of the character to be drawn thereby generating the object, without deleting the font cache.

The mentioned arrangement facilitates the generated font cache to be more properly stored in the region in the font cache storage region 211, corresponding to the priority of the character to be drawn. In addition, the character drawing performance can be improved, compared with the case where the font caches of all the characters are to be generated.

According to the embodiment, further, the image forming apparatus 2 includes the renderer 114 and the image forming device 12. Therefore, the printing operation can be executed, free from an error due to the memory shortage.

Since the kanji characters used in Chinese or Japanese are ideograms, the number of characters is greater than the alphabets, which are phonograms. Accordingly, in the case of drawing the characters with respect to a text document composed of the language that employs the kanji characters, the capacity of the font cache storage region is subjected to pressure, and the risk of error due to the memory shortage is increased. In addition, the usage rate of the font cache is reduced.

With the aforementioned first to third known techniques, although the vacant capacity can be secured, the use frequency of the character is not taken into consideration. Therefore, the improvement in usage rate of the font cache is unable to be expected. With the second technique, the memory shortage may be incurred, when there are many characters that are used a predetermined number of times or more. Thus, the first to third techniques are unable to solve the mentioned drawbacks. In contrast, the arrangement according to the foregoing embodiment enables the usage rate of the font cache to be improved, and prevents the occurrence of an error due to the memory shortage.

### Other Variations

Although the information processing apparatus 3 is exemplified by the PC in the foregoing embodiment, the invention is not limited to such embodiment. For example, a digital front end (DFE) server may be adopted as the information processing apparatus 3.

Although the job manager 115 causes the image forming device 12 to form the image represented by the generated image data, on the sheet P, according to the embodiment, the invention is not limited to such embodiment. For example, the job manager 115 may store the generated image data in the HDD 18, or transmit the generated image data to an external device through the facsimile communication device 21 or the communication device 22, according to the instruction of the user received through the information processing apparatus 3.

Although the image forming device 12 is configured to form an image on the sheet P according to the foregoing embodiment, the invention is not limited to such embodiment. The image forming device 12 may form an image, for example, on an overhead projector (OHP) sheet.

The invention may be modified in various manners, without limitation to the foregoing embodiment and the variations thereof. For example, although the image forming apparatus 2 according to the invention is exemplified by the color multifunction peripheral in the embodiment, the image forming apparatus 2 may be a different type of apparatus, such as a monochrome multifunction peripheral, a copier, or a facsimile machine.

Further, the configurations and processings described in the foregoing embodiment and the variations thereof, with reference to Fig. 1 to Fig. 10B, are merely exemplary, and in no way intended to limit the invention to those configurations and processings.

## Claims

1. A data processing system (1) comprising:
an information processing apparatus (3); and
a data processing apparatus (2),
wherein the information processing apparatus (3) includes:
a first communication device (34) that communicates with the data processing apparatus (2), via a network; and
a first controller (30) that calculates, upon receipt of a drawing instruction of a text document containing a plurality of characters, use frequency of the character of a same font name and a same font size, with respect to each of the plurality of characters, generates print data, including priority information indicating priority of each of the characters in order of the use frequency, and the text document, and transmits the print data to the data processing apparatus (2) via the first communication device (34), and
the data processing apparatus (2) includes:
a second communication device (22) that communicates with the information processing apparatus (3) via the network;
a storage device (200) including a font cache storage region (211); and
a second controller (110) that determines a character to be drawn among the plurality of characters, upon receipt of the print data via the second communication device (22), generates a font cache of the character to be drawn, and stores the font cache in a region in the font cache storage region (211) corresponding to the priority of the character to be drawn, when the font cache storage region (211) has a vacant capacity for storing the font cache corresponding to at least one character, and secures the vacant capacity by deleting the font cache of a character lowest in priority, among font caches stored in the font cache storage region (211), when the font cache storage region (211) is without the vacant capacity.

2. The data processing system (1) according to claim 1,
wherein, when the font cache storage region (211) has the vacant capacity, and the priority of the character to be drawn is lower than the priority of the characters respectively represented by all the font caches already stored in the font cache storage region (211), the second controller (110) of the data processing apparatus (2) stores the font cache of the character to be drawn in the font cache storage region (211), according to a rule for storing the font cache in order of generation, and
when the priority of the character to be drawn is higher than the priority of at least one of the characters respectively represented by all the font caches, the second controller (110) stores the font cache of the character to be drawn, by inserting the font cache in a position in the font cache storage region (211), corresponding to an older order of generation, than the font caches of all the characters lower in priority than the character to be drawn.

3. The data processing system (1) according to claim 2,
wherein, when the font cache storage region (211) has no vacant capacity, and the priority of the character to be drawn is higher than the priority of at least one of the characters respectively represented by all the font caches, the second controller (110) deletes the font cache of the character lowest in priority among the font caches stored in the font cache storage region (211), and
when the priority of the character to be drawn is lower than the priority of the characters respectively represented by all the font caches, the second controller (110) performs outlining of the character to be drawn thereby generating an object, without deleting the font cache.

4. The data processing system (1) according to claim 1,
wherein the second controller (110) of the data processing apparatus (2) performs outlining of the character to be drawn thereby generating an object, upon deciding that the font cache of the character to be drawn is unable to be generated.

5. The data processing system (1) according to claim 1,
wherein the control device of the data processing apparatus (2) further acts, when the processor executes the first computer program, as a renderer (114) that draws the character in the text document, using the font cache stored in the font cache storage region (211), and generates image data, and
the data processing apparatus (2) further includes an image forming device (12) that forms an image represented by the image data generated by the renderer (114).

6. An information processing apparatus (3) comprising:
a first communication device (34) that communicates with the data processing apparatus (2), via a network; and
a first controller (30) that calculates, upon receipt of a drawing instruction of a text document containing a plurality of characters, use frequency of the character of a same font name and a same font size, with respect to each of the plurality of characters, generates print data, including priority information indicating priority of each of the characters in order of the use frequency, and the text document, and transmits the print data to the data processing apparatus (2) via the first communication device (34).

7. A data processing apparatus (2) comprising:
a second communication device (22) that communicates with the information processing apparatus (3) via the network;
a storage device (200) including a font cache storage region (211); and
a second controller (110) that determines a character to be drawn among the plurality of characters, upon receipt of the print data via the second communication device (22), generates a font cache of the character to be drawn, and stores the font cache in a region in the font cache storage region (211) corresponding to the priority of the character to be drawn, when the font cache storage region (211) has a vacant capacity for storing the font cache corresponding to at least one character, and secures the vacant capacity by deleting the font cache of a character lowest in priority, among font caches stored in the font cache storage region (211), when the font cache storage region (211) is without the vacant capacity.
